# EUROPEAN PATENT APPLICATION

(11) **EP 0 728 953 A1**
(43) Date of publication of application: **28.08.1996**
(21) Application number: 96301130.9
(22) Date of filing: 20.02.1996
(51) Int. Cl.: F16B 37/08

(54) **Stud fastener**

(30) Priority: 24.02.1995 JP 36579/95
(71) Applicant: EMHART INC., Newark, Delaware 19711 (US)
(72) Inventor: Sano Takahiro, Aichi 441 (JP)
(74) Representative: Stagg, Diana Christine

(57) **Abstract**

A stud fastener (1) comprises a hollowed stud engaging portion (7) for receiving a stud (3) which stands on a panel (2), the stud engaging portion (7) having an inner wall (13) having engagement means (14) formed to engage with a groove or a thread of the stud (3), so that when the stud engaging portion (7) is pressed to receive the stud (3) therein, the stud fastener (1) is fixed to mount another member on the panel (2).

The engagement means (14) comprises a cantilevered engagement piece extending from a certain position on the inner wall (13) of the stud engaging portion (7) along the circumference of the inner wall (13) and the cantilevered engagement piece is so formed that the end thereof is biased toward the centre of the stud engaging portion (7).

## Description

The present invention relates to a stud fastener comprising a hollowed stud engaging portion for receiving a stud which stands on a panel, wherein the stud engaging portion has an inner wall having engagement means formed to engage with a groove or a thread formed on the stud, so that when the stud engaging portion is pressed to receive the stud therein, the stud fastener is fixed to mount another member on the panel.

There is a known stud fastener comprising a hollowed engaging portion for receiving a stud which stands on a panel, the inner wall of the stud engaging portion having engagement means formed to engage with a groove or a thread formed on the stud, so that when the stud engaging portion is pressed to receive the stud therein, the stud fastener is fixed to mount another member on the panel. In the stud engaging portion of the known stud fastener, a pair of engagement pawls are formed so that each pawl extends slantingly from the entrance side to the inner side of the stud engaging portion. The engaging portion is pressed to receive the stud therein, so that the ends of the engagement pawls are bent radially outwardly by the stud and then engage with the thread of the stud.

The known stud fastener described above is convenient in that the fastener can be fixed simply by pressing the stud engaging portion onto the stud. However, there are some disadvantages. If it is made thicker so as to increase the engagement strength of the engagement pawls, the resisting force against pressing is increased because the ends of the engagement pawls are bent radially outwardly. Thus, insufficient pressing might cause unsatisfactory fixing. If the engagement pawls are made less thick so as to reduce the resistance against pressing, the engagement strength decreases. Thus, undesired disengagement might occur. Further, in the known stud fastener, the stud receiving hole of the stud engaging portion is formed in conformity with a stud shank diameter. Thus, many stud fasteners with different diameter stud receiving holes must be made available for varied shank diameters of studs.

It is an object of the present invention to provide a stud fastener which offers less resistance against pressing but is higher in engagement strength, and is capable of being applied to studs with different shank diameters.

The present invention provides a stud fastener comprising a hollowed stud engaging portion for receiving a stud which stands on a panel, the stud engaging portion having an inner wall having engagement means formed to engage with a groove or a thread formed on the stud, so that when the stud engaging portion is pressed to receive the stud therein, the stud fastener is fixed to mount another member on the panel, characterised in that the engagement means is composed of a cantilevered engagement piece extending from a certain position on the inner wall of the stud engaging portion along the circumference of the inner wall and the cantilevered engagement piece is so formed that the end thereof is biased toward the centre of the stud engaging portion.

Since the engagement piece is composed of the cantilevered finger extending along the circumference of the inner wall of the stud engaging portion and having an end thereof being biased toward the centre of the stud engaging portion the engagement pieces are easily bent to come closer to the inner wall of the stud engaging portion to reduce their resistance against pressing of the stud engaging portion onto the stud. Thereafter, the engagement pieces restore themselves so as to recover from the bending, and then the engagement pieces engage with the circumferential groove or thread of the stud to attain high engagement force. The engagement pieces comprising the cantilevered engagement pieces have a wide range of bending and can be applied to any of studs having different shank diameters.

According to the present invention, a pair of said cantilevered engagement pieces may be diametrically opposed to each other on the inner wall of the stud engaging portion. In this case, each of the engagement pieces may be composed of a first engagement piece extending from the certain position on the inner wall of the stud engaging portion along one circumferential direction on the inner wall of the stud engagement portion and a second engagement extending along the opposite circumferential direction on the inner wall. In a plurality of engagement pieces, the end of one of the engagement pieces can be higher than the end of another engagement piece in the longitudinal direction of the stud engaging portion by a length corresponding to the stud thread pitch. Each of the engagement pieces may be composed of a root portion projecting inwardly from the inner wall of the stud engaging portion, a spring functioning portion from the root portion along the circumference of the inner wall with a certain space apart from the inner wall, and an end portion folded from the spring functioning portion into the centre of the stud engaging portion, so that the pressing force can be reduced and the engagement force can be increased. In doing so, each of the engagement pieces can be formed in a plate configuration with a width corresponding to a predetermined length along the axis of the stud engaging portion and the end portion is tapered so as to widen the stud receiving hole at the entrance of the stud engaging portion.

Further, an end of the stud engaging portion my be formed so as to press and hold the other member against the panel on which the stud stands. It is also possible that the stud engaging portion is integrated with a band for winding an elongated member such as a wire harness, and a buckle for receiving the band to lock the engagement with the band. The stud engaging portion can be integrated with a holding portion capable of fixing the member such as a wire harness. For the stud fastener, either a threaded stud or an I-type stud having a circumferential groove in a mid position heightwise may be used.

The present invention is described further with reference to the accompanying drawings, in which
Figure 1 is a perspective view of a first embodiment of a stud fastener according to the present invention,
Figure 2 is a plan view of the stud fastener of Figure 1,
Figure 3 is a front view of the stud fastener of Figure 1,
Figure 4 is a side view of the stud fastener of Figure 1.
Figure 5 is a sectional view taken along the line A-A of Figure 2,
Figure 6 is a sectional view taken along the line B-B of Figure 3,
Figure 7 is a sectional view taken along the line C-C of Figure 3,
Figure 8 is a vertical sectional view similar to Figure 7, showing that an attachment member is mounted on a panel by means of the stud fastener of Figure 1 which has been fixed to a small diameter threaded stud standing on the panel,
Figure 9 is a cross sectional view similar to Figure 6, showing the stud fastener in the condition shown in Figure 8,
Figure 10 is a view similar to Figure 8, showing that the attachment member is mounted on the panel by means of the stud fastener of Figure 1 which has been fixed to a large-diameter threaded stud standing on the panel,
Figure 11 is a plan view of a second embodiment of a stud fastener according to the present invention,
Figure 12 is a front view of the stud fastener of Figure 11,
Figure 13 is a front view showing a wire harness fixed to the panel using the stud fastener of Figure 11,
Figure 14 is a plan view of a third embodiment of a stud fastener according to the present invention,
Figure 15 is a front view showing a wire harness fixed to the panel using the stud fastener of Figure 14,
Figure 16 is a plan view of a fourth embodiment of a stud fastener according to the present invention,
Figure 17 is a sectional view taken along the line D-D of Figure 16, showing the wire harness attached to the stud fastener of Figure 16,
Figure 18 is a sectional view taken along the line E-E of Figure 19, showing that the attachment member is mounted on the panel by means of the stud fastener of Figure 16 which has been fixed to a small diameter I-type stud standing on the panel,
Figure 19 is a cross sectional view of the stud fastener in the state of Figure 18 and
Figure 20 is a view similar to Figure 18 showing the stud fastener of Figure 16 fixed to a large-diameter I-type stud.

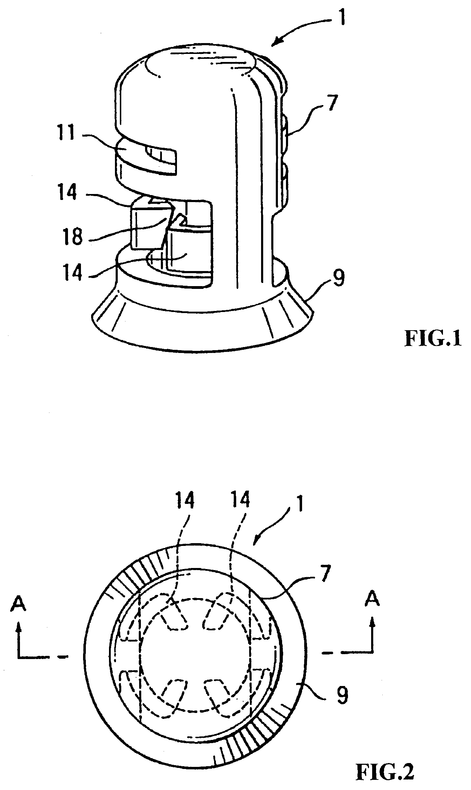

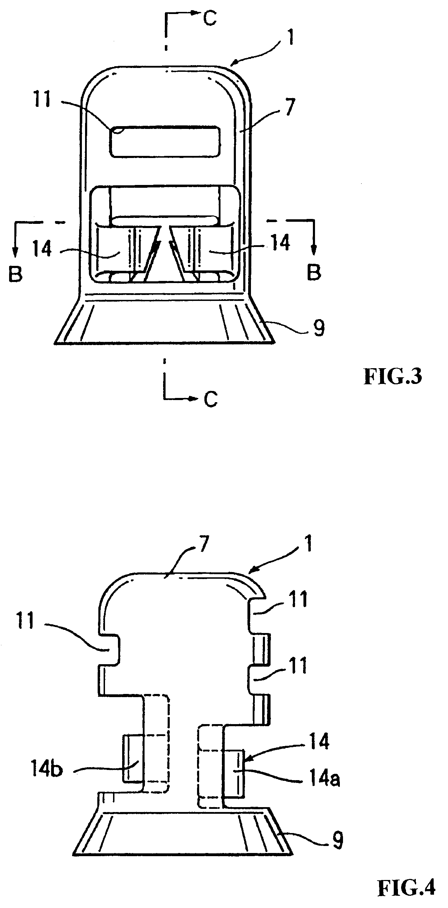

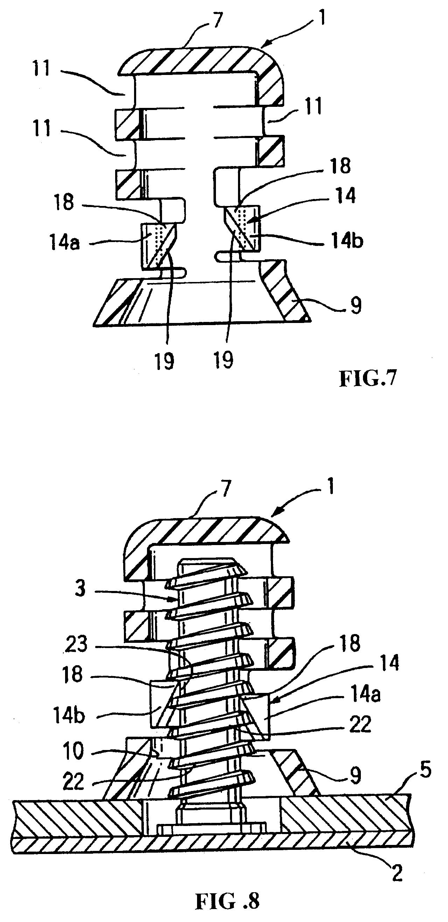

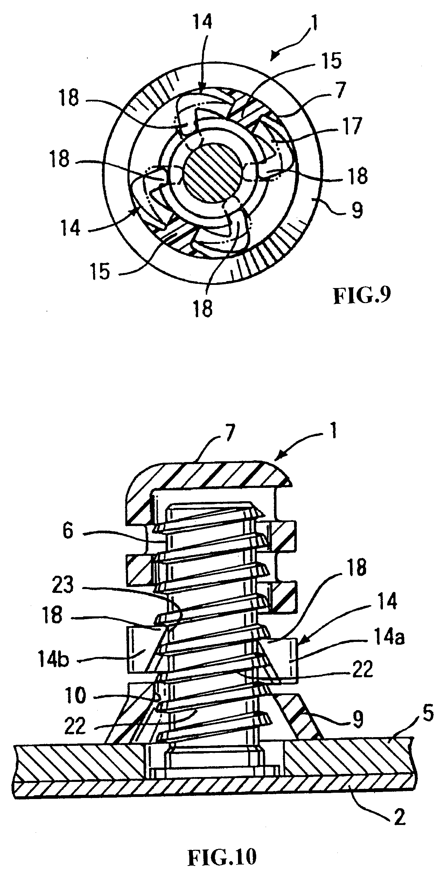

Figures 1 to 10 show a first embodiment of a stud fastener according to the present invention. Figures 1 to 7 illustrate the construction of a stud fastener 1. In Figures 8 and 9 an attachment member 5 is mounted on a panel 2 by means of a small diameter threaded stud 3 standing on the panel 2 and the stud fastener 1 which is fixed to the threaded stud 3. Figure 10 shows the attachment member 5 mounted by means of the stud fastener 1 on the panel 2 on which a large diameter threaded stud 6 stands.

The stud fastener 1 is a plastic one-piece moulded article and comprises a stud engaging portion 7 which is hollowed so as to receive the threaded stud 3 standing on the panel 2 shown in Figure 8 and a tapered flange 9 which is formed on an end (lower end) of the stud engaging portion 7 so as to press the attachment member 5 against the panel. The stud engaging portion 7 is formed with a stud receiving hole 10 to receive the threaded stud therein. The upper end of the hole is closed to prevent the stud from projecting outwardly. In order to save material and to reduce weight, a plurality of windows 11 are formed on the sides of an upper portion.

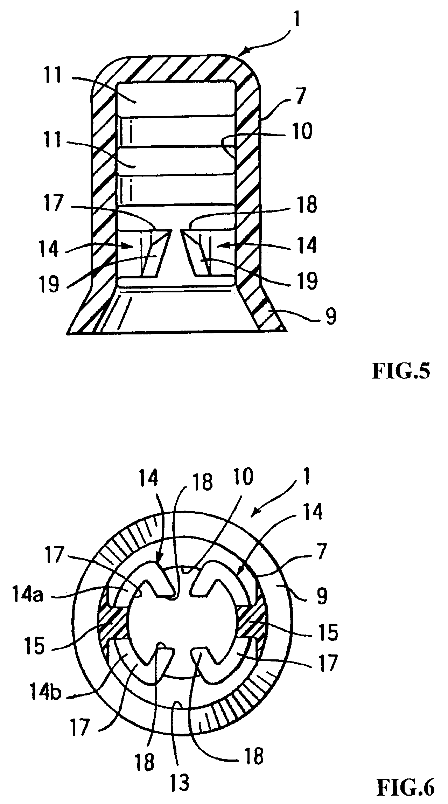

As shown in Figure 6, the stud engaging portion 7 has cantilevered engagement pieces or fingers 14, each of which extends from a certain position on an inner wall 13 of the stud engaging portion along the circumference of the inner wall and is so formed that the end thereof is biased toward the centre of the stud engaging portion. The engagement pieces 14 engage with a thread of the threaded stud to fix the stud fastener 1 to the stud. In the embodiment illustrated, in order to strengthen the engagement force, a pair of engagement pieces 14 are formed to be diametrically opposed to each other in the stud receiving hole. Each of the paired engagement pieces comprises a first engagement piece 14a extending from a first position on the inner wall 13 in a circumferential direction on the inner wall and a second engagement piece 14b extending in an opposite circumferential direction to the first engagement piece 14a. Thus, they have four engagement points for the stud so as to increase further the engagement force. At the engagement pieces 14 of the stud engaging portion, openings are formed to allow end portions 18 of the engagement pieces to be bent sufficiently outwardly when the fastener is pressed.

Each of the engagement pieces comprises a root portion 15 projecting inwardly from the inner wall 13, a spring functioning portion 17 extending from the root portion 15 along the circumference of the inner wall with a certain space apart from the inner wall, and the end portion 18 folded from the spring functioning portion 17 into the centre of the stud engaging portion. This construction increases the flexibility as well as the restoring force after engagement, so as to facilitate the fastening operation and ensure highly reliable engagement. As illustrated, each of the engagement pieces 14 is formed in a plate configuration with a width corresponding to a predetermined length along the axis of the stud engaging portion 7. The end portion 18 is formed with a tapered surface 19 (see Figures 5 and 7) so as to widen the stud receiving hole at the entrance of the stud engaging portion. Thus, the stud is easily received when the fastener is pressed on the stud. In addition, the end portion 18 of one (14a) of a plurality of the engagement pieces is staggered to be higher than the end portion 18 of the other engagement piece 14b in the longitudinal direction of the stud engaging portion by a length (a half pitch) corresponding to the stud thread pitch, so that engagement force to the threaded stud is strengthened.

With reference to Figures 8 and 9, it is explained how the stud fastener 1 as described above is fixed to the threaded stud to mount the attachment member on the panel. The attachment member 5 is placed on the panel 2 on which the threaded stud 3 stands, so that the stud 3 passes through a mounting hole 21. Then, the stud fastener 1 is pressed onto the threaded stud 3 to receive, in the receiving hole 10, the threaded stud 3 which projects from the mounting hole 21. When thus pressed, the end portions 18 of the engagement pieces 14 can be easily bent from the position indicated by phantom lines in Figure 9 to the position shown by solid lines in Figure 9 in line with the threads 22 of the stud under the influence of the spring functioning portions 17, so that the stud is smoothly press-fitted into the fastener. Upon completion of the pressing, the end portions 18 of the engagement pieces 14 return to the positions indicated by the phantom lines in Figure 9 according to the function of the spring functioning portions 17 to engage firmly with a thread 23, so that this engagement is effective in reliably fixing the stud fastener 1 to the stud 3. When the stud fastener 1 has been fixed, the flange 9 presses against the attachment member 5 to support the attachment member 5 on the panel 2. If it is mounted loosely, the stud fastener 1 may be slightly rotated in the direction in which the stud is screwed so as to obtain tight mounting. The stud fastener 1 can be removed easily when it is turned in the reverse direction.

Figure 10 shows the attachment of the stud fastener 1 to a large-diameter threaded stud 6 fixed to the panel. As illustrated, even in the case of the large-diameter threaded stud 6, the engagement pieces 14 are easily bent and are reliably restored so that less force is required to press the stud fastener 1 and the end portions 18 of the engagement pieces reliably engage with the thread 23. Accordingly, the same stud fastener 1 is applicable to threaded studs with different diameters.

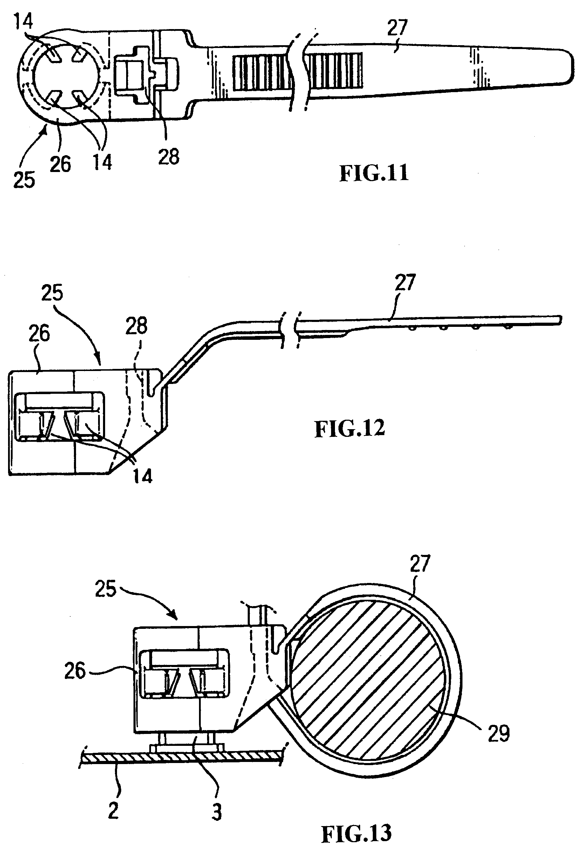

Figures 11 to 13 show a second embodiment of a stud fastener according to the present invention. A stud fastener 25 comprises a stud engaging portion 26 having engagement pieces 14 which are identical to those of the first embodiment; a band 27 extending sideways from the stud engaging portion 26; and a buckle 28 which is formed at the root of the band 27 to lock the engagement with the band. As shown in Figure 23, the band 27 is wound around an elongated member such as a wire harness 29 and the holding by the band winding is maintained by means of the buckle 28. When the stud engaging portion 26 is pressed onto the threaded stud 3, the engagement pieces 14 operate to fix the stud fastener 25 to the stud 3, thereby fixing the wire harness 29 to the panel 2.

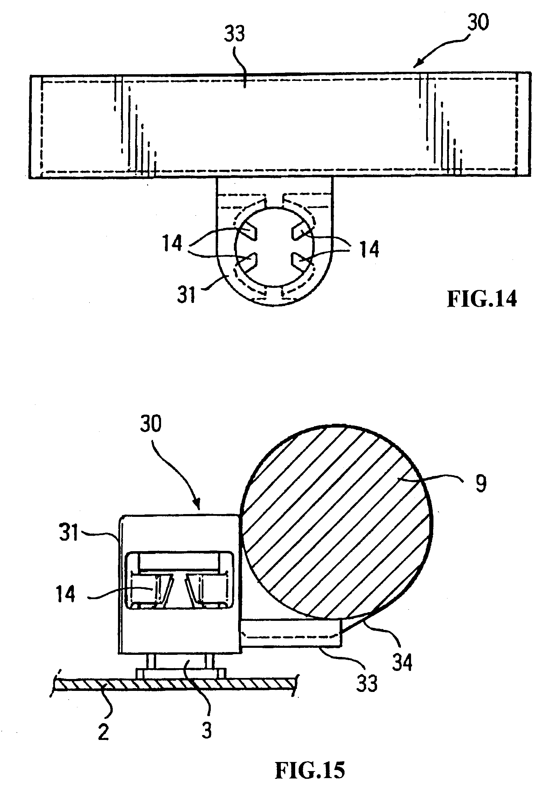

Figures 14 and 15 show a third embodiment of a stud fastener 30 according to the present invention. The stud fastener 30 comprises a stud engaging portion 31 having the engagement pieces 14 which are identical to those of the first embodiment, and an elongated plate-like holding portion 33 extending tangentially with respect to the stud engaging portion 31. As shown in Figure 15, the holding portion 33 holds an elongated member such the wire harness 29 by winding a tape 35 around the wire harness. When the stud engaging portion 31 is pressed onto the threaded stud 3, the engagement pieces 14 operate to fix the stud fastener 30 to the stud 3, thereby fixing the wire harness 29 to the panel 2.

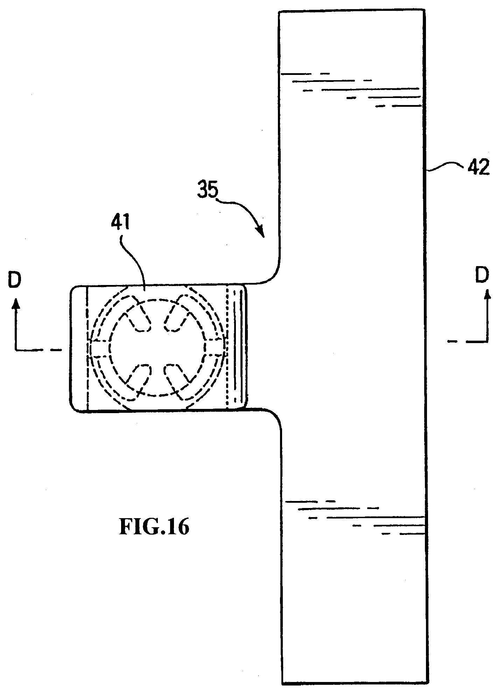

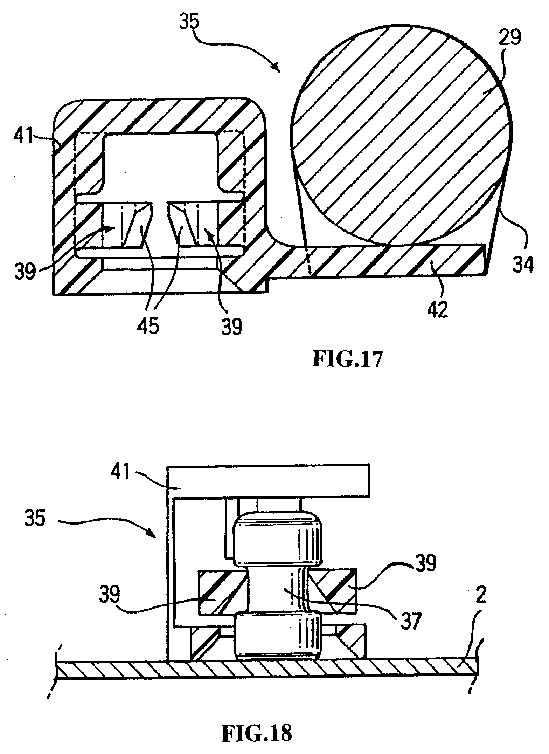

Figures 16 to 20 show a fourth embodiment of a stud fastener 35 according to the present invention. The stud fastener 35 is fixed to an I-type stud 38 which is fixed to the panel as shown in Figure 18. The I-type stud 38 is formed with a circumferential groove 37 in a mid portion heightwise. The stud fastener 35 comprises a stud engaging portion 41 having engagement pieces 39 which are similar to the engagement pieces 14 of the first embodiment stud fastener 1; and an elongated plate-like holding portion 42 extending tangentially with respect to the stud engaging portion 41. In the same way as engagement pieces 14, the engagement pieces 39 of the stud engaging portion 41 have spring functioning portions 43 and end portions 45 which are folded from the spring functioning portions 43 and run toward the centre.

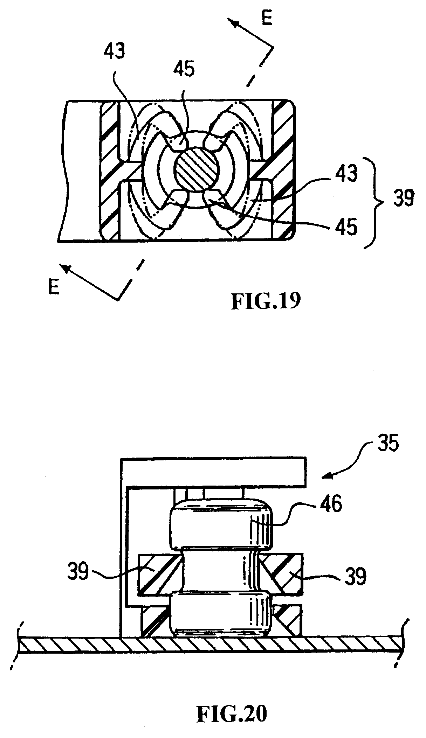

As shown in Figure 17, the holding portion 42 holds an elongated member such as the wire harness 29 by winding the tape 34 around the wire harness. When the stud engaging portion 41 is pressed onto the I-type stud 38, the spring functioning portions 43 of the engagement pieces 39 are bent to allow the end portions 45 to move to the position indicated by phantom lines in Figure 19 and the I-type stud 38 is smoothly pressed into the stud engaging portion 41. Upon completion of the pressing, the end portions 18 of the respective engagement pieces 39 are restored to the position shown by solid lines in Figure 19 owing to functioning of the spring functioning portion 43 to engage with the circumferential groove 37 of the I-type stud 38. The stud fastener 35 is firmly fixed to the I-type stud 38 through this engagement, so that the fixing of the stud fastener 35 fixes the wire harness 29 to the panel 2. In this embodiment, the four engagement pieces 39 are at the same height so as to engage with the circumferential groove 37 of the I-type stud 38. Figure 20 illustrates a large diameter I-type stud 46 fixed to the panel 2. As shown, the engagement pieces 39 are in engagement with the circumferential groove without any problem.

In the stud fastener according to the present invention, the engagement means is comprises a cantilevered engagement piece extending from a certain position on the inner wall of the stud engaging portion along the circumference of the inner wall and the cantilevered engagement piece is so formed that the end thereof is biased toward the centre of the stud engaging portion. Therefore, the engagement pieces are easily bent to come closer to the inner wall of the stud engaging portion to reduce their resistance against pressing of the stud engaging portion onto the stud. Thereafter, the engagement pieces restore themselves so as to recover from the bending, and then the engagement pieces engage with the circumferential groove or thread of the stud to attain high engagement force. The engagement pieces comprising the cantilevered engagement pieces have a wide range of bending and can be applied to any of studs having different shank diameters.

## Claims

1. A stud fastener (1) comprising a hollowed stud engaging portion (7) for receiving a stud (3) which stands on a panel (2), the stud engaging portion (7) having an inner wall (13) having engagement means (14) formed to engage with a groove or a thread of the stud (3), so that when the stud engaging portion (7) is pressed to receive the stud (3) therein, the stud fastener (1) is fixed to mount another member on the panel (2);
characterised in that the engagement means (14) is composed of a cantilevered engagement piece extending from a certain position on the inner wall (13) of the stud engaging portion (7) along the circumference of the inner wall (13) and the cantilevered engagement piece is so formed that the end thereof is biased toward the centre of the stud engaging portion (7).

2. The stud fastener according to claim 1 wherein a pair of said cantilevered engagement pieces are diametrically opposed to each other on the inner wall of the stud engaging portion.

3. The stud fastener according to claim 2 wherein each of the engagement pieces comprises a first engagement piece (14a) extending from the certain position on the inner wall of the stud engaging portion along one circumferential direction on the inner wall and a second engagement piece (14b) extending along the opposite circumferential direction to the inner wall.

4. A stud fastener according to either claim 2 or claim 3 wherein the end of one of a plurality engagement pieces is higher than the end of another engagement piece in the longitudinal direction of the stud engaging portion by a length corresponding to the stud thread pitch.

5. A stud fastener according to any one of claims 1 to 4 wherein each of the engagement pieces comprises a root portion (15) projecting inwardly from the inner wall (13) of the stud engaging portion (7), a spring functioning portion (17) extending from the root portion (15) along the circumference of the inner wall (13) with a certain space apart from the inner wall, and an end portion (18) folded from the spring functioning portion (17) into the centre of the stud engaging portion (17).

6. The stud fastener according to claim 5 wherein each of the engagement pieces is formed in a plate configuration with a width corresponding to a predetermined length along the axis of the stud engaging portion and the end portion is tapered so as to widen the stud receiving hole at the entrance of the stud engaging portion.

7. A stud fastener according to any one of claims 1 to 6 wherein an end of the stud engaging portion is formed so as to press and hold the other member against the panel on which the stud stands.

8. A stud fastener according to any one of claims 1 to 6 wherein the stud engaging portion is integrated with a band for winding a elongated member such as a wire harness, and a buckle for receiving the band to lock the engagement with the band.

9. A stud fastener according to any one of claims 1 to 6 wherein the stud engaging portion is integrated with a holding portion capable of fixing the member such as a wire.

10. A stud fastener according to any one of claim 1 to 9 wherein a threaded stud is used.

11. A stud fastener according to any one of claims 1 to 9 wherein an I-type stud having a circumferential groove in a mid position heightwise is used.
